(19) Europäisches Patentamt
European Patent Office
Office européen des brevets

(11) EP 2 963 090 A1

(12) EUROPEAN PATENT APPLICATION

(43) Date of publication:
06.01.2016 Bulletin 2016/01

(51) Int Cl.:
$C09D \ 5/08$ (2006.01)   $C01B \ 25/18$ (2006.01)
$C09C \ 1/00$ (2006.01)

(21) Application number: 14460113.5

(22) Date of filing: 17.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.06.2014 PL 40869714

(71) Applicant: Instytut Elektrotechniki
04-703 Warzawa (PL)

(72) Inventors:
• Szymanski, Wojciech
53-423 Wroclaw (PL)
• Halama, Agnieszka
50-339 Wroclaw (PL)
• Pasciak, Grzegorz
52-408 Wroclaw (PL)

(74) Representative: Kozlowska, Regina
ul. Pomorska 4/16
50-218 Wroclaw (PL)

(54) **Method of manufacturing an anticorrosive pigment, the anticorrosive pigment and its application**

(57)    The subject of this invention is a method of manufacturing an anticorrosive pigment, the anticorrosive pigment itself and its application, especially in organic protective coatings.

The essence of the method, according to the invention, consists in that the reagents zinc phosphate tetrahydrate $Zn_3(PO_4)_2 \cdot 4H_2O$ in the amount of 110.0 g, heptamolybdate tetrahydrate $(NH_4)_6Mo_7O_{24} \cdot 4H_2O$ in the amount of 40.6 g - 70 g, calcium oxide CaO in the amount of 30.1 g - 54.0 g, boric acid $H_3BO_3$ in the amount of 100.0 g and sodium carbonate $Na_2CO_3$ in the amount of 15.3 g - 50.1 g are thoroughly mixed and calcined at a temperature from 1000 °C to 1100 °C for 0.5 h to 1 h until a glass phase is formed, upon which the obtained melt containing zinc oxide ZnO in the amount of 58.6 g, phosphoric oxide $P_2O_5$ in the amount of 34.1 g, molybdenum oxide $MoO_3$ in the amount of 33.1g - 57.1 g, calcium oxide CaO in the amount of 30.1 g-54.0 g, boric oxide $B_2O_3$ in the amount of 56.3 g and sodium oxide $Na_2O$ in the amount of 8.89 g - 29.3 g, are grinded, advantageously to the grain size below 5 μm.

The essence of the anticorrosive pigment, according to the invention consists in that it has a form of a powdered melt containing zinc oxide ZnO in the amount of 58.6 g, phosphoric oxide $P_2O_5$ in the amount of 34.1 g, molybdenum oxide $MoO_3$ in the amount of 33.1 g - 57.1 g, calcium oxide CaO in the amount of 30.1 g - 54.0 g, boric oxide $B_2O_3$ in the amount of 56.3 g and sodium oxide $Na_2O$ in the amount of 8.9 g-29.3 g, advantageously with the grain size below 5 μm.

Use of a powdered melt, which is added in the amount from 10.1 g to 52.6 g into 1000 g of paint as an active pigment, enhancing corrosion resistivity of coatings made from solvent and water soluble epoxy paints, and solvent and water soluble polyvinyl, acryl and alkyd epoxy paints.

EP 2 963 090 A1

**Description**

The subject of this invention is a method of manufacturing an anticorrosive pigment, the anticorrosive pigment itself and its application, especially in organic protective coatings.

The strict conditions imposed on environment and health protection, which resulted in restrictions of applications of active chromate and lead pigments commonly used, up to now, in organic coatings, caused the need of development of new effective and non toxic active pigments for anti-corrosive paints. In the paper by M. Zubielewicz et al.: Mechanisms of non-toxic anticorrosive pigments in organic waterborne coatings, Prog. Org. Coat. 49 (2004) 358-371, the research concerning the mechanism of behavior of toxic anti-corrosive pigments from the group of phosphates and ferrites was presented, and in the paper by R. Naderi et al.: Investigation on the inhibition synergism of new generations of phosphate-based anticorrosion pigments, Dyes and Pigments 105 (2014) 23-33, the role of zinc, alumina, molybdenum, along with zinc, calcium and strontium orthophosphates, and other phosphate based compounds, as anticorrosive pigments for corrosion protection of soft steels exposed to 3.5 % sodium chloride, was discussed. Currently, the active pigment, the most commonly used in organic coatings intended for anticorrosive protection of steels, is zinc orthophosphate. However, it is not an universal pigment, and the zinc content in varnish coats is restricted due to its harmful effect on ground water and marine organisms.

An anticorrosive pigment safe for environment, known from the US patent No US7828884, is made of calcium phosphate fabricated by calcination of a mixture of calcium and phosphorous compounds at a mole ratio Ca/P from 0.50 to 1.00 in a temperature range of 180 °C to 350 °C.

An anticorrosive pigment and the method of its manufacturing is known from the US patent application No US7438881. The method consists in that aluminum orthophosphate is obtained as a result of reaction of phosphoric acid with aluminum hydroxide at a temperature of 120 °C, and after precipitation in water, the precipitate is filtered and dried. The dry aluminum orthophosphate is preheated at the temperature from 500 °C to 800 °C. Then, the aluminum orthophosphate is grinded at one step, to obtain the grains with the size below 30 $\mu$m. The pigment is made of aluminum orthophosphate containing amorphous aluminum orthophosphate, rhombic aluminum orthophosphate either a mixture of rhombic and amorphous rhombic aluminum orthophosphate or a mixture of rhombic, triangular and amorphous rhombic aluminum orthophosphate.

An active, free of heavy metals additions, non-toxic, anticorrosive pigment on the basis of phosphates, which is particularly environment friendly, known from the US patent No US5665149, is a mixture of tricalcium $\beta$-phosphate and tertiary magnesium phosphate or dicalcium phosphate dihydrate. The pigment is compatible with typical raw materials and additions used in paints.

A composition inhibiting corrosion on metal surfaces, known from the US patent No US6503305 contains the compounds of pohosphorus, consisting of phosphoric acid and a metal selected from the group of alkaline metals, alkaline earth metals, transition metals or metals and boron compound, consisting of boric acid and a metal selected from the group of alkaline metals, alkaline earth metals, transition metals, ensures corrosion inhibition. The method of manufacturing the nontoxic corrosion inhibitor includes mixing of 30-60 wt.% of water with 10-20 wt.% of barium carbonate, 10-20 wt.% of phosphoric acid (75%), 5-15 wt. % of calcium and 10-20 wt.% of boric acid, followed by stirring of the mixture for 10-15 min until a wet suspension is formed, rubbing the wet suspension in a mill for 15-60 min, drying, grinding and dedusting the suspension until achieving a dry pigment with an average particle size from 1.0 $\mu$m to 2.0$\mu$m

The essence of the method, according to the invention, consists in that the reagents zinc phosphate tetrahydrate $Zn_3(PO_4)_2 \cdot 4H_2O$ in the amount of 110.0 g, heptamolybdate tetrahydrate $(NH_4)_6Mo_7O_{24} \cdot 4H_2O$ in the amount of 40.6 g - 70 g, calcium oxide CaO in the amount of 30.1 g - 54.0 g, boric acid $H_3BO_3$ in the amount of 100.0 g and sodium carbonate $Na_2CO_3$ in the amount of 15.3 g - 50.1 g are thoroughly mixed and calcined at a temperature from 1000 °C to 1100 °C for 0.5 h to 1 h until a glass phase is formed, upon which the obtained melt containing zinc oxide ZnO in the amount of 58.6 g, phosphoric oxide $P_2O_5$ in the amount of 34.1 g, molybdenum oxide $MoO_3$ in the amount of 33.1g - 57.1 g, calcium oxide CaO in the amount of 30.1 g - 54.0 g, boric oxide $B_2O_3$ in the amount of 56.3 g and sodium oxide $Na_2O$ in the amount of 8.89 g - 29.3 g, are grinded, advantageously to the grain size below 5 $\mu$m.

The essence of the anticorrosive pigment, according to the invention consists in that it has a form of a powdered melt containing zinc oxide ZnO in the amount of 58.6 g, phosphoric oxide $P_2O_5$ in the amount of 34.1 g, molybdenum oxide $MoO_3$ in the amount of 33.1g - 57.1 g, calcium oxide CaO in the amount of 30.1 g - 54.0 g, boric oxide $B_2O_3$ in the amount of 56.3 g and sodium oxide $Na_2O$ in the amount of 8.9 g - 29.3 g, advantageously with the grain size below 5 $\mu$m.

The essence of the invention is also the use of a powdered melt which consists of zinc oxide ZnO in the amount of 58.6 g, phosphoric oxide $P_2O_5$ in the amount of 34.1 g, molybdenum oxide $MoO_3$ in the amount of 33.1g - 57.1 g, calcium oxide CaO in the amount of 30.1 g - 54.0 g, boric oxide $B_2O_3$ in the amount of 56.3 g and sodium oxide $Na_2O$ in the amount of 8.9 g - 29.3 g, obtained according to the claim 1, which is added in the amount from 10.1 g to 52.6 g into 1000 g of paint as an active pigment, enhancing corrosion resistivity of coatings made from solvent and water soluble epoxy paints, and solvent and water soluble polyvinyl, acryl and alkyd epoxy paints.

The anticorrosive pigment, according to the invention, is non-toxic and highly effective. Using of the pigment in organic protective coatings is characterized by high efficiency of the effect of inhibiting steel corrosion in water solutions.

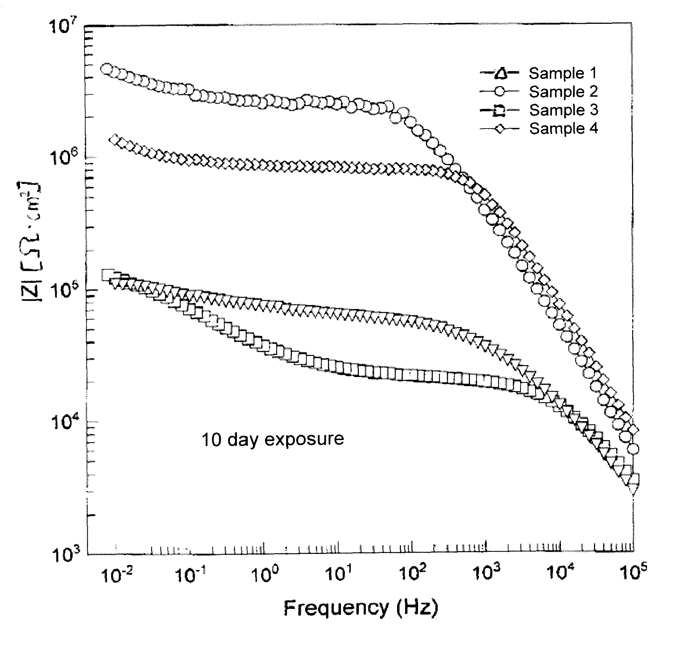

The subject of the invention is explained on examples of realization and in the drawing showing the Bode diagram of an epoxy paint after ten-day exposure in 3% solution of NaCl.

Example 1

Initial reagents containing zinc phosphate tetrahydrate $Zn_3(PO_4)_2 \cdot 4H_2O$ in the amount of 110.0 g, heptamolybdate tetrahydrate $(NH_4)_6Mo_7O_{24} \cdot 4H_2O$ in the amount of 70 g, calcium oxide CaO in the amount of 30.1 g, boric acid $H_3BO_3$ in the amount of 100.0 g and sodium carbonate $Na_2CO_3$ in the amount of 50.1 g are thoroughly grinded in a ball mill for 6 h. Then, the mixture is calcined in a corundum crucible in a muffle furnace at a temperature of 1000 °C for 0.5 h until a glass phase is formed. The obtained pigment containing zinc oxide ZnO in the amount of 58.6 g, phosphoric oxide $P_2O_5$ in the amount of 34.1 g, molybdenum oxide $MoO_3$ in the amount of 57.1 g, calcium oxide CaO in the amount of 30.1 g boric oxide $B_2O_3$ in the amount of 56.3 g and sodium oxide $Na_2O$ in the amount of 29.3 g, are grinded in a zirconium mill to the grain size below 5 $\mu$m.

Examples of amounts of oxides contained in the anticorrosive pigment, obtained from the distribution of the used reagents are shown in Table 1 and Table 2.

Example 2

The anticorrosive pigment is a powdered melt containing zinc oxide ZnO in the amount of 58.6 g, phosphoric oxide $P_2O_5$ in the amount of 34.1 g, molybdenum oxide $MoO_3$ in the amount of 51.0 g, calcium oxide CaO in the amount of 36.2 g, boric oxide $B_2O_3$ in the amount of 56.3 g and sodium oxide $Na_2O$ in the amount of 29.3 g, whose grain size is below 5 $\mu$m.

Example 3

The anticorrosive pigment is a powdered melt containing zinc oxide ZnO in the amount of 58.6 g, phosphoric oxide $P_2O_5$ in the amount of 34.1 g, molybdenum oxide $MoO_3$ in the amount of 51.0 g, calcium oxide CaO in the amount of 54.0 g, boric oxide $B_2O_3$ in the amount of 56.3 g and sodium oxide $Na_2O$ in the amount of 8.9 g, whose grain size is below 5 $\mu$m.

Example 4

Using of anticorrosive pigment in a form of powdered melt with the grain size below 5 $\mu$m, which is composed of zinc oxide ZnO in the amount of 58.6 g, phosphoric oxide $P_2O_5$ in the amount of 34.1 g, molybdenum oxide $MoO_3$ in the amount of 51.0 g, calcium oxide CaO in the amount of 36.2 g, boric oxide $B_2O_3$ in the amount of 56.3 g and sodium oxide $Na_2O$ in the amount of 29.3 g, as an active pigment in the amount of 10.1 g in 1000 g of a commercial solvent soluble epoxy paint. The paint containing the pigment was deposited according to requirements of the PN-EN ISO 1514:2006 standard.

Example 5

Using of anticorrosive pigment made as in Example 4, with the difference that the active pigment in the amount of 20.41 g is added to 1000 g of two-component epoxy paint which does not contain any other active pigments.

Table 1. Weight amounts of reagents and the obtained oxides for the compositions 1 - 5.

| Pigment | | 1 | | 2 | | 3 | | 4 | | 5 | |
|---|---|---|---|---|---|---|---|---|---|---|---|
| Oxide | Reagent | Reagent mass [g] | Oxide mass [g] | Reagent mass [g] | Oxide mass [g] | Reagent mass [g] | Oxide mass [g] | Reagent mass [g] | Oxide mass [g] | Reagent mass [g] | Oxide mass [g] |
| ZnO | $Zn_3(PO_4)_2$ $\cdot 4H_2O$ | 110,0 | 58,6 | 110,0 | 58,6 | 110,0 | 58,6 | 110,0 | 58,6 | 110,0 | 58,6 |
| $P_2O_5$ | | | 34,1 | | 34,1 | | 34,1 | | 34,1 | | 34,1 |
| $MoO_3$ | $(NH_4)_6Mo_7O_{24}$ $4H_2O$ | 70,0 | 57,1 | 62,5 | 51,0 | 56,3 | 45,9 | 50,0 | 40,8 | 40,6 | 33,1 |
| CaO | CaO | 30,1 | 30,1 | 36,2 | 36,2 | 41,3 | 41,3 | 46,4 | 46,4 | 54,0 | 54,0 |
| $B_2O_3$ | $H_3BO_3$ | 100,0 | 56,3 | 100,0 | 56,3 | 100,0 | 56,3 | 100,0 | 56,3 | 100,0 | 56,3 |
| $Na_2O$ | $Na_2CO_3$ | 50,1 | 29,3 | 50,1 | 29,3 | 50,1 | 29,3 | 50,1 | 29,3 | 50,1 | 29,3 |

Table 2. Weight amounts of reagents and the obtained oxides for the compositions 6 - 10.

| Pigment | | 6 | | 7 | | 8 | | 9 | | 10 | |
|---|---|---|---|---|---|---|---|---|---|---|---|
| Tlenek | Reagent | Reagent mass [g] | Oxide mass [g] | Reagent mass [g] | Oxide mass [g] | Reagent mass [g] | Oxide mass [g] | Reagent mass [g] | Oxide mass [g] | Reagent mass [g] | Oxide mass [g] |
| ZnO | $Zn_3(PO_4)_2$ ·$4H_2O$ | 110,0 | 58,6 | 110,0 | 58,6 | 110,0 | 58,6 | 110,0 | 58,6 | 110,0 | 58,6 |
| $P_2O_5$ | | | 34,1 | | 34,1 | | 34,1 | | 34,1 | | 34,1 |
| $MoO_3$ | $(NH_4)_6Mo_7O_{24}$ $4H_2O$ | 70,0 | 57,1 | 70,0 | 57,1 | 70,0 | 57,1 | 70,0 | 57,1 | 70,0 | 57,1 |
| CaO | CaO | 32,6 | 32,6 | 35,2 | 35,2 | 37,7 | 37,7 | 40,3 | 40,3 | 42,8 | 42,8 |
| $B_2O_3$ | $H_3BO_3$ | 100,0 | 56,3 | 100,0 | 56,3 | 100,0 | 56,3 | 100,0 | 56,3 | 100,0 | 56,3 |
| $Na_2O$ | $Na_2CO_3$ | 43,1 | 25,2 | 36,3 | 21,2 | 29,5 | 17,3 | 22,5 | 13,2 | 15,3 | 8,9 |

Example 6

Using of anticorrosive pigment made as in Example 4 with the difference that the active pigment in the amount of 52.6 g is added to 1000 g of commercial acryl paint.

The anticorrosive pigment, according to the invention, enhancing corrosion resistance of coatings is used in solvent and water soluble epoxy paints, and solvent and water soluble polyvinyl, acryl and alkyd epoxy paints.

Table 3. Results of corrosion resistance tests for coatings tested in a salt chmber

| Polyvinyl paint | Number of 24-hour cycles | | | | | |
|---|---|---|---|---|---|---|
| | 1,3 | 7 | 14 | 28 | 42 | 56 |
| Commercial paint | UNCH | Rust on 5% surface | Rust on 15% surf. small blisters | Rust on 25% surf. corrosion cracks up to 5 mm, small blisters 20% surf. | Rust on 30% surf. corrosion cracks up to 8 mm, small blisters 3(S2) | Rust on 40% surf. corrosion cracks up to 12 mm, blisters on 30% surf. |
| 10.10 g pigment in 1000 g paint | UNCH | UNCH | UNCH | UNCH | Only corrosion cracks up to 2 mm | Only corrosion cracks up to 5 mm |
| 20.41 g pigment in 1000 g paint | UNCH | UNCH | UNCH | UNCH | UNCH | Only corrosion cracks up to 3 mm |
| 30.90 g pigment in 1000 g paint | UNCH | UNCH | UNCH | UNCH | .UNCH | Only corrosion cracks up to 5 mm |

The active pigment manufactured as in Example 2 was applied to a coating of polyvinyl paint which did not contain any other anticorrosive pigments. The coatings of the paints containing 10.1 g, 20.41 g and 30.90 g of pigment in 1000 g of commercial paint were deposited on test plates, according to the requirements of PN-EN ISO 1514:2006 standard. The thickness of the coatings was ca. 60 $\mu$m. Accelerated corrosion tests in a salt chamber were made according to the standard PN-EN ISO 9227:2012. The assessment of destruction degree was carried out according to the standard series PN-EN ISO 4628. Results of tests performed in a salt chamber on a commercial polyvinyl coating and the coating modified with the pigment in the amounts listed above are collected in Table 3.

The polyvinyl coatings with the pigment according to the invention, reveal much higher corrosion resistance in comparison to the coating from commercial paint containing active zinc phosphate in the amount of 111.10 g in 1000 g paint as a pigment.

The samples with the coatings made from the manufactured paint and a corresponding commercial paint were made according to requirements of the standard PN-EN ISO 1514:2006. The thickness of deposited coatings was 100 $\mu$m. The tests were performed by impedance spectroscopy method on the following samples: sample 1 - a coating from a commercial paint; sample 2 - the paint as in Example 1 modified with the pigment, sample 3 - the coating from the commercial paint subjected to exposure in a salt chamber for 1000 h, according to PN-EN ISO 9227:20012; sample 4 - the coating from the commercial paint modified with the pigment as in Example 2, exposed in the salt chamber analogously to the sample from the commercial paint. The results of tests after a ten-day exposure in 3 mass % NaCl solution are shown in a drawing. Investigations made by impedance spectroscopy method showed significantly higher corrosion resistance of the coatings from epoxy paint containing 2 mass % addition of the pigment, manufactured according to Example 1 (samples 2 and 4), in comparison to the coatings made from the commercial paint (samples 1 and 3).

Results of potentiodynamic studies of the efficiency of inhibiting effect of the pigment on corrosion of St3s steel in an aerated pure HCl solution, obtained by dissolution of 3 g NaCl in 97 g $H_2O$, and in the solution containing 1.0 g of the pigment, obtained according to Example 1 in 99 g of NaCl solution after 2 and 24 hour exposure are collected in Table 4.

Table 4. Results of potentiodynamic studies

| Lp. | NaCl solution | Test duration [h] | Current density [$\mu$A/cm$^{-2}$] | Corrosion rate [g m$^{-2}$h$^{-1}$] | Pigment efficiency [%] | B$_k$ [mV/dec] | $\beta_a$ [mV/dec] |
|---|---|---|---|---|---|---|---|
| 1 | Commercial paint | 2 | 3.31 | 0.034 | - | -72.9 | 168 |
| 2 | Commercial paint | 24 | 5.98 | 0.062 | - | -112 | 179 |
| 3 | 1,0 g pigment in 99 g solution | 2 | 2.81 | 0.029 | 24.6 | -106 | 114 |
| 4 | 1,0 g pigment in 99 g solution | 24 | 2.90 | 0.030 | 60.1 | -108 | 105 |

Efficiency of pigment inhibiting effect on steel corrosion was computed from the equation:

$$S_k = \frac{i_0 - i}{i_0} \cdot 100\%$$

where:

$i_0$ - corrosion current in NaCl solution,
i - corrosion current in NaCl solution with addition of inhibitor (pigment wg according to Example 1)
$\beta_k$, $\beta_a$ - cathode and anode Tafel slope.

The performed studies showed that the corrosion rate of St3s steel in an aerated NaCl solution after two hours was 0.034 g/m$^2$h, and after 24 hours - 0.062 g/m$^2$h. After addition of 1.0 g of the tested inhibiting corrosion pigment to 99 g of the solution, the revealed corrosion of the steel almost did not change and was 0.029 g/m$^2$h and 0.030 g/m$^2$h after 2 and 24 hours, respectively. Estimated efficiency of inhibiting effect of the pigment was 24.6 % after 2 h and 60.1 % after 24 h of testing. Addition of 1 g of the active pigment to 99 g of NaCl solution resulted in shifting the steel potential in the applied solution in a positive direction of 89 mV after 2 h testing and of 74 mV after 24 h of testing. The shift of potential in positive direction confirms the surface passivation and inhibiting of the anode reaction of iron oxidation. Results of the potentiodynamic studies show high inhibiting efficiency of the applied pigment.

**Claims**

1. Method of manufacturing an anticorrosive pigment, **characterized in that** it essence of the method, according to the invention, consists **in that** the reagents zinc phosphate tetrahydrate $Zn_3(PO_4)_2 \cdot 4H_2O$ in the amount of 110.0 g, heptamolybdate tetrahydrate $(NH_4)_6Mo_7O_{24} \cdot 4H_2O$ in the amount of 40.6 g - 70 g, calcium oxide CaO in the amount of 30.1 g - 54.0 g, boric acid $H_3BO_3$ in the amount of 100.0 g and sodium carbonate $Na_2CO_3$ in the amount of 15.3 g - 50.1 g are thoroughly mixed and calcined at a temperature from 1000 °C to 1100 °C for 0.5 h to 1 h until a glass phase is formed, upon which the obtained melt containing zinc oxide ZnO in the amount of 58.6 g, phosphoric oxide $P_2O_5$ in the amount of 34.1 g, molybdenum oxide $MoO_3$ in the amount of 33.1 g - 57.1 g, calcium oxide CaO in the amount of 30.1 g - 54.0 g, boric oxide $B_2O_3$ in the amount of 56.3 g and sodium oxide $Na_2O$ in the amount of 8.89 g - 29.3 g, are grinded, advantageously to the grain size below 5 $\mu$m.

2. The anticorrosive pigment, **characterized in that** it essence of the anticorrosive pigment, according to the invention consists **in that** it has a form of a powdered melt containing zinc oxide ZnO in the amount of 58.6 g, phosphoric oxide $P_2O_5$ in the amount of 34.1 g, molybdenum oxide $MoO_3$ in the amount of 33.1g - 57.1 g, calcium oxide CaO in the amount of 30.1 g - 54.0 g, boric oxide $B_2O_3$ in the amount of 56.3 g and sodium oxide $Na_2O$ in the amount of 8.9 g - 29.3 g, advantageously with the grain size below 5 $\mu$m.

3. Use of anticorrosion pigment in the powdered melt which consists of zinc oxide ZnO in the amount of 58.6 g, phosphoric oxide $P_2O_5$ in the amount of 34.1 g, molybdenum oxide $MoO_3$ in the amount of 33.1g - 57.1 g, calcium oxide CaO in the amount of 30.1 g - 54.0 g, boric oxide $B_2O_3$ in the amount of 56.3 g and sodium oxide $Na_2O$ in the amount of 8.9 g - 29.3 g, obtained according to the claim 1, **characterized in that** it which is added in the amount from 10.1 g to 52.6 g into 1000 g of paint as an active pigment, enhancing corrosion resistivity of coatings made from solvent and water soluble epoxy paints, and solvent and water soluble polyvinyl, acryl and alkyd epoxy paints.

Europäisches
Patentamt

European
Patent Office

Office européen
des brevets

## EUROPEAN SEARCH REPORT

Application Number

EP 14 46 0113

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 95/09131 A1 (COOKSON MATTHEY CERAMICS PLC [GB]; SMITH PETER JOHN [GB]; MANGAT HARBA) 6 April 1995 (1995-04-06) * claims 1,22-26 * | 1-3 | INV. C09D5/08 C01B25/18 C09C1/00 |
| A | DE LIMA-NETO P ET AL: "Study of the anticorrosive behaviour of epoxy binders containing non-toxic inorganic corrosion inhibitor pigments", PROGRESS IN ORGANIC COATINGS, ELSEVIER BV, NL, vol. 62, no. 3, 1 May 2008 (2008-05-01), pages 344-350, XP022586221, ISSN: 0300-9440, DOI: 10.1016/J.PORGCOAT.2008.01.012 [retrieved on 2008-03-10] * figures 1-8; tables 1-3 * | 1-3 | |
| A | US 7 513 946 B2 (LAUMANN GISELA [DE] ET AL) 7 April 2009 (2009-04-07) * claim all * | 1-3 | |
| A | DATABASE WPI Week 201373 Thomson Scientific, London, GB; AN 2013-S53093 XP002747491, & JP 2013 216977 A (NAKAJIMA SANGYO KK) 24 October 2013 (2013-10-24) * abstract * | 1-3 | TECHNICAL FIELDS SEARCHED (IPC) C09D C09C C01B |

-/--

The present search report has been drawn up for all claims

| Place of search | Date of completion of the search | Examiner |
|---|---|---|
| Munich | 20 October 2015 | Schmitt, Johannes |

EPO FORM 1503 03.82 (P04C01)

Europäisches Patentamt

European Patent Office

Office européen des brevets

**EUROPEAN SEARCH REPORT**

Application Number

EP 14 46 0113

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE WPI<br>Week 201232<br>Thomson Scientific, London, GB;<br>AN 2011-P34643<br>XP002747492,<br>& CN 102 219 383 A (ZHEJIANG KAIER NEW MATERIAL CO LTD)<br>19 October 2011 (2011-10-19)<br>* abstract *<br>----- | 1-3 | |

TECHNICAL FIELDS
SEARCHED      (IPC)

The present search report has been drawn up for all claims

| Place of search | Date of completion of the search | Examiner |
|---|---|---|
| Munich | 20 October 2015 | Schmitt, Johannes |

EPO FORM 1503 03.82 (P04C01)

**ANNEX TO THE EUROPEAN SEARCH REPORT
ON EUROPEAN PATENT APPLICATION NO.** EP 14 46 0113

This annex lists the patent family members relating to the patent documents cited in  the above-mentioned European search report.
The members are as contained in the European Patent Office EDP file on
The European Patent Office is in no way liable for these particulars which are merely given for the purpose of information.

20-10-2015

| Patent document cited in search report | | Publication date | Patent family member(s) | | Publication date |
|---|---|---|---|---|---|
| WO 9509131 | A1 | 06-04-1995 | AU | 7703694 A | 18-04-1995 |
| | | | DE | 69419928 D1 | 09-09-1999 |
| | | | DE | 69419928 T2 | 23-12-1999 |
| | | | EP | 0721430 A1 | 17-07-1996 |
| | | | US | 5747395 A | 05-05-1998 |
| | | | WO | 9509131 A1 | 06-04-1995 |
| US 7513946 | B2 | 07-04-2009 | AT | 538184 T | 15-01-2012 |
| | | | AU | 2006275059 A1 | 08-02-2007 |
| | | | BR | PI0614302 A2 | 22-03-2011 |
| | | | DE | 102005036630 B3 | 14-09-2006 |
| | | | EP | 1913098 A2 | 23-04-2008 |
| | | | ES | 2379680 T3 | 30-04-2012 |
| | | | JP | 5361382 B2 | 04-12-2013 |
| | | | JP | 2009503206 A | 29-01-2009 |
| | | | US | 2008223256 A1 | 18-09-2008 |
| | | | WO | 2007014683 A2 | 08-02-2007 |
| JP 2013216977 | A | 24-10-2013 | JP | 5586740 B2 | 10-09-2014 |
| | | | JP | 2013216977 A | 24-10-2013 |
| CN 102219383 | A | 19-10-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7828884 B
- US 7438881 B
- US 5665149 A
- US 6503305 B

### Non-patent literature cited in the description

- **M. ZUBIELEWICZ et al.** Mechanisms of non-toxic anticorrosive pigments in organic waterborne coatings. *Prog. Org. Coat.,* 2004, vol. 49, 358-371
- **R. NADERI et al.** Investigation on the inhibition synergism of new generations of phosphate-based anticorrosion pigments. *Dyes and Pigments,* 2014, vol. 105, 23-33